# EUROPEAN PATENT SPECIFICATION

(11) **EP 3 995 709 B1**
(45) Date of publication and mention of the grant of the patent: **09.08.2023**
(21) Application number: 20382971.8
(22) Date of filing: 10.11.2020
(51) Int. Cl.: F16B 37/04

(54) **ATTACHMENT DEVICE**
BEFESTIGINGSEINRICHTUNG
DISPOSITIF DE FIXATION

(43) Date of publication of application: 11.05.2022
(73) Proprietor: Celulosa Fabril, S.A., 50016 Zaragoza (ES)
(72) Inventor: CARRERO SESÉ, Juan Luis, E-50016 Zaragoza (ES); SÁNCHEZ ANDRÉS, Alberto, E-50016 Zaragoza (ES); BARATTO FERNÁNDEZ, Carlos, E-50016 Zaragoza (ES); GONZÁLEZ MARTÍNEZ, Ángel, E-50016 Zaragoza (ES); IRANZO TOMÁS, Javier, E-50016 Zaragoza (ES)
(74) Representative: ABG Intellectual Property Law, S.L.

(56) References cited:
- EP-B1- 2 551 531
- AU-A- 3 953 772

## Description

### TECHNICAL FIELD OF THE INVENTION

The present invention relates to an improved attachment device with an increased interference surface that provides a lower risk of the attachment device detachment and a greater retention of the elements that this attachment device fixes. The present invention also relates to an assembly of an attachment device fixed to a bench.

### BACKGROUND OF THE INVENTION

Current attachment devices are generally used in a variety of industrial fields in order to connect two structural components, e.g., plates, and to provide an attachment by means of a device more commonly called "grommet". This type of attachment devices are mainly used in the automotive field, for example in the mounting stages of automobile's dashboards, so as to join plates and assure a properly fastened assembly.

In general mounting stages, grommets are inserted into a hole and present a screw housed inside said attachment device. Then, driving the screw consequently extends protrusions of the device outward of said device which are responsible for locking this device and securely attach the whole assembly. As a result, every element of said assembly is connected to each other thanks to the attachment device or grommet.

Usually, these attachment devices are made of a non-conductive component which fully cover the metal screw housed inside the grommet. Since these attachment devices are commonly used in the field of automotive, electrical insulation characteristics are relevant.

A known attachment device is disclosed in the patent EP 2 551 531 B1. This patent document discloses an attachment device comprising a nut member, a flange member and tabs connecting the flange member to the nut member. Said nut member of the attachment device presents blocks showing abutment faces having a polygonal outline form.

One of the drawback of the known solutions is that they present a low holding force both before and after screwing, and in turn, these known attachment devices do not facilitate the operator to know when they reach the ideal working position or are correctly assembled. At the same time, the previously mentioned solutions present a lower interference surface, both before screwing and after screwing, that may cause increasing the risk of device detachment before screwing during assembly operation. This interference surface corresponds to the surfaces of the attachment device that contact to the surfaces of a bench on assembly process.

The present invention provides a new attachment device that provides the operator being aware and warned when the attachment device reaches its ideal working position and then confirm the correct assembly. Moreover, the improved attachment device of the present invention provides a higher interference surface and at the same time facilitates its fastening consequently lowering the risk of detachment.

### SUMMARY OF THE INVENTION

The present invention provides a solution for the aforementioned problems, by an attachment device according to claim 1 and an assembly according to claim 14. In dependent claims, preferred embodiments of the invention are defined.

In a first inventive aspect, the invention provides an *attachment device comprising:*
- *a nut element extending along a longitudinal axis and comprising an axial thread-engaging bore,*
- *a flange element extending transversely to the axis and comprising an opening, the flange element being spaced axially from the nut element, and*
- *a plurality of tabs connecting the flange element to the nut element, each tab comprising a first end connected to the nut element and a second end connected to the flange element;*
*wherein*
*the attachment device is configured to be screwed by a screw along the axial thread-engaging bore of the nut element from the opening of the flange element,*
*each tab comprises a first projection inwards the attachment device and a second projection outwards the attachment device having an outer face,*
*the first projection defines a first gap between the flange element and a tab and a second gap between the nut element and said tab, and*
*the nut element is configured to move axially towards the flange element until the nut element contacts the tabs and the tabs contact the flange element during screwing, so that when the nut element is moved axially towards the flange element the tabs bend inwardly and the outer face of the second projection approaches towards the flange element.*

The present invention provides, in a first inventive aspect, an attachment device intended to be mounted or assembled on a bench through a previously performed hole and to provide secured and correct mounting on the bench. In particular, the present attachment device is used to join components, in such a way that it is first subjected to an assembly or mounting process in which the attachment device is mounted into a bench and then this same attachment device is subjected to a screwing in which the device is fixed to the bench by a screw during a screwing process.

The attachment device comprises a nut element, a flange element and a plurality of tabs.

The nut element is the structural element of the present attachment device into which a screw can be screwed. The nut element is extending along a longitudinal axis and comprises an axial thread-engaging bore that is concentric to the longitudinal axis. Said nut element is configured to house a screw along its bore.

The flange element is extending transversely to the longitudinal axis and is spaced axially from the nut element. The flange element provides to the present attachment device contact with a bench surface when the attachment device is mounted on the bench. Said flange element also presents an opening designed for housing a screw during a screwing process. The screwing into the attachment device is performed from the opening of the flange element towards inside the axial thread-engaging bore of the nut element.

The tabs define protrusions or projections for the attachment device and are located on each side face of the attachment device. That is, the tabs are protrusions that project towards the inside of the attachment device and towards the outside of the attachment device. These tabs connect the flange element to the nut element, so that the tabs are located between the nut element and the flange element. Particularly, each tab is limited by two ends, a first end that connects the tab to the nut element, and a second end that connects the tab to the flange element.

Each tab presents a first projection oriented inwards the attachment device so that this first projection protrudes from the tab inwards the attachment device. The first projection defines inside the attachment device a first gap and a second gap. The first gap is located between the flange element and the first projection. The second gap is located between the nut element and the first projection. Both gaps are arranged inside the attachment device so that a portion of the first projection contacts with the screw when screwing is performed through the attachment device. This first projection can be movable and bend when the attachment device is subjected to an assembly process into a bench or a screwing process by a screw.

Moreover, each tab presents a second projection oriented outwards the attachment device and comprising an outer face. The second projection protrudes from the tab outwards the attachment device being opposite to the protruding of the first projection. Particularly, the second projection comes in contact with a bench during the mounting of the attachment device into the bench in an assembly process, particularly, at least it is the outer face of the second projections which contacts with a surface of the bench.

In a particular embodiment, *the attachment device comprises at least a rest position and a compression position, on the rest position the tabs are static and free of bending, and on the compression position the tabs are bended inwardly the attachment device.* According to the present attachment device, the tabs comprise at least two positions, a rest position and a compression position. In the rest position, the tabs are not subjected to bending while in the compression position they are. It will be understood that when the tabs are subjected to bending, these tabs are compressed with respect to their rest position. In the rest position, the tabs are neither constrained by the screw inserted inside the attachment device nor but the insertion of the attachment device into a bench. Additionally, on the compression position, once the attachment device endures the forces of the insertion into the previously perforated bench, the tabs are bended inwards said attachment device and provide the ability to attach this device, at the same time, to be correctly inserted and maintain all the elements necessary to be fastened.

Once the attachment device is mounted into a bench, this device is subjected to a screwing process wherein a screw is inserted into the attachment device from the opening of the flange element along the bore of the nut element. When a screwing is performing, the nut element tends to move axially towards the flange element until the same nut element contacts the tabs and the tabs contact the flange element. As a result of the axially displacement of the nut element towards the flange element, the tabs bend inwards the attachment device and the outer face of the second projection approaches towards the flange element.

In addition, during the assembly of the attachment device into a bench prior to the screwing, this attachment device is also subjected to an axial displacement of the nut element along the longitudinal axis and consequently to the bending of the tabs. Therefore, the attachment device is configured so that nut element moves axially along the longitudinal axis and consequently the tabs bend.

Particularly, in an assembly process, the tabs of the attachment device go from their rest position to a first compression position. During screwing, the tabs go from said first compression position to a second compression position with greater compression for the tabs than in the first compression position, and *vice versa.*

When screwing or assembling, it will be understood that the attachment device is configured so that the nut element approaches to the flange element. In this sense, once the tabs bend, at least until the gap between the flange element and tabs and the gap between nut element and gaps disappeared, then the nut element tends to move away from the flange element and the tabs return to a position of less compression. Thus, the tabs have the ability to recover part of the deformation suffered during the assembly or screwing processes, so that the grommet can be disassembled and reassembled after assembly or screwing. The elastic deformation of the grommet depends on several variables as the applied tightening torque, fixing hole's size and raw material properties. The grommet has been designed to optimize these variables in order to reach a proper assembly/disassembly process before and after screwing.

The torsion force provided in the nut element during screwing may also cause a limited axial rotation of the same nut element generated by its torque up to contact of the tabs with the flange element. These tabs absorb the torque transmitting part of the torque to the screw during a screwing.

The particular configuration of the plurality of tabs in the present attachment device provides an increase of the interference surface of the attachment device during assembly and screwing processes. Particularly, for each side face of the attachment device, the tab is extended from the corner of the device at least to mid side face of this device. Compared to prior art solutions, the present attachment device provides an interface surface greater than about twice the interference surface of the prior art solutions when it is assembled into the bench (before screwing). Advantageously, the increase in interface surface minimizes the risk of detachment of the attachment device when it is mounted on the bench. In addition, the present attachment device works in a greater tolerance range of bench than the prior art devices.

Furthermore, the interference surface provided by the present attachment device after screwing is greater than about four times the interference surface of the prior art solutions. Additionally, the increase in interface surface further increases the retention of the elements/components fixed by the present grommet or attachment device. For example, the increased interference surface provides a higher retention to the attachment device as for instance during airbag deployment.

Furthermore, the present attachment device provides an interference surface after screwing that changes according to the applied torque, wherein the minimum retention of the attachment device is higher than the retentions of the prior art attachment devices. This flexibility provided by the change in the interference surface allows the attachment device to be used for different weights of pieces as well as reduces the risk of lack of fixation due to dimensional defects of the counter-pieces that it joins.

In a preferred embodiment, the attachment device is made of a non-conductive material.

In a particular embodiment, *the second projection of the tab comprises two side ends and the distance that the second projection protrudes from the tab varies between these side ends of this second projection, in such a way that the second projection protrudes a higher distance at one of their side ends than at the other side end.*

The second projection of each tab of the attachment device presents two side ends, one of this side ends is close to one corner of the grommet and the other side end is further away from this particular corner. Each second projection protrudes a distance outwards the attachment device that varies between these side ends of the second projection. That is, the second projection protrudes a higher distance at one of their side ends than at the other side end.

Advantageously, the variation of protruding distance between the two side ends of the second projection is provided to prevent more interference surface than needed and in turn facilitate the disassembly of the present attachment device.

In a more particular embodiment, one of the side ends of the second projection is a continuation of a side of the attachment device, and the other side ends of the second projection is substantially perpendicular to a side of the attachment device that consecutive to the one device side mentioned.

In a particular embodiment, *according to a sectional view of the tab transverse to the axis, the second projection defines a straight line between the furthest points of the tab at the side ends of the second projection.* This particular configuration and variation of protruding distance between the side ends of the second projections consequently impact the outer face of the second projection being contained in a plane that forms a particular angle with respect to the longitudinal axis.

Once the attachment device is screwed, both side ends of each second projection of tabs protrudes practically the same protruding distance from the grommet because the tab undergoes a torsion. The tabs deformation due to the torsion force is limited thanks to the fact that this torsion force is retained by the tabs, that is, the tabs absorbs the torque provided by the nut element by transiting part of this torque against the screw.

Advantageously, the furthest points of the tab defines the extremities of the tabs and are responsible of the correct fitting of said attachment device when is assembled into a bench. This particular configuration of the second projection facilities the sliding of the attachment device during its insertion into a bench either. Therefore, the assembly and disassembly of the attachment device is also facilitated.

In a particular embodiment, *the outer face of the second projection is contained in a plane that forms an angle with respect to the axis so that when the nut element is moved axially towards the flange element the angle that said plane forms with respect to the axis varies.*

The displacement of the nut element along the longitudinal axis causes the bending of the tabs, particularly, the approach of the nut element towards the flange element causes the tabs to bend inwards the attachment device. Thus, when the tabs bend inwards, the outer face of the second projection of the tabs tends to approach slightly towards the flange element. Therefore, the angle formed by the plane containing this outer face of the second projection with respect to the longitudinal axis increases compared to the rest position of the tabs. This angle is greater for any compression position of the tabs compared to their rest position.

Advantageously, the tabs are flexible parts which adapt to the forces, strains and rotations endured during assembly and screwing processes.

In a particular embodiment, *on the rest position the outer face of the second projection is contained in a first plane and on the compression position the outer face is contained in a second plane different to the first plane.*

Advantageously, the movement of the tabs consequently provides the outer face of the second projection to be either in a first plane or a second plane and adapt to the necessary fit for the previously performed hole in a bench. The tolerable compression of the tabs results as performing the correct fitting of the attachment device with respect to the previously performed reception hole.

In a particular embodiment, *the distance that the first projection protrudes from the tab is greater than the distance that the second projection protrudes from the tab.* The first projection protrudes from the tabs inwards the attachment device so that the first projection contacts with a screw in a screwing process in order to minimize the torsion provided in the nut element being greater than needed. The second projection protrudes in such a way that it provides minimal interference with the bench during assembly and therefore facilitates the assembly, while the first projection protrudes in such a way that it reduces the provision of torque in the grommet.

*In a particular embodiment, the tabs further comprise an elongated portion between the second end and the first and second projections of each tab, and wherein the elongated portion is a weakened wall configured to facilitate the bending of the tab.* This elongated portion of the tab actuates as a connecting element between the tabs and the flange element and ensure the bending of tabs in an assembly process of the attachment device.

Advantageously, the elongated portion between the second end and the first and second projections of each tab facilitates the bending of each tab and provides to the attachment device the ability to be inserted inside the previously perforated hole in the bench.

In a more particular embodiment, *the elongated portion comprises an uneven external surface.* The external surface of the elongated portion provides certain interference surface that facilitates the pushing of the elongated portion and its being inwards the attachment device in an assembly process. In a more particular embodiment, the external surface of this elongated portion comprises a plurality of grooves or teeth.

Advantageously, the elongated portion present a plurality of grooves and teeth on its external surface which provide grip to the attachment device on the bench.

In a particular embodiment, *the attachment device comprises four side faces.*

Advantageously, the attachment device presents four side faces in order to proportionally distribute forces and strains endured during the mounting step.

In a more particular embodiment, *the attachment device comprises a tab on each side face.* More particularly, the attachment device comprises a symmetrical configuration on its side faces. This symmetrical configuration ensures correct grommet fixation thanks to the distribution of forces in the grommet.

In a particular embodiment, *the attachment device is further configured to be assembled into a bench so that when the attachment device is assembled into said bench the outer face of the second projection of the tab is positioned in opposition to the bench.* When the attachment device is inserted into a bench, this attachment device is subjected to compression so that the tabs bend inwards the device and the outer face of the second projection is positioned opposite to the bench.

In a more particular embodiment, *the attachment device is configured so that during screwing the second projection of the tab is fixed against the bench and at least a portion of the first projection is fixed against the screw.* On a screwing process with the attachment device already assembled into a bench, the outer face of the second projection contacts with the bench and the first projection contacts with a screw so that the second projection is fixed against the bench and the first projection is partially fixed against a screw.

Advantageously, the second projection of the tab is fixed against the bench while the screw is driven and provides the equal distribution of forces on each side of the attachment device in order to ensure the correct fixation of said attachment device. At the same time, at least a portion of the first projection is fixed against the screw which is responsible for providing fixation to the whole set formed by the attachment device, the bench and the screw.

In a second inventive aspect, the invention provides an *assembly comprising a bench with a first hole and an attachment device according to any of previous claims, the attachment device being inserted into the first hole so that the flange element of the attachment device supports on one side of the bench without passing through the first hole and the tabs of the attachment device being arranged on the other side of the bench in opposition to the flange element in such a way that the second projection of the tabs protrudes beyond the section of the first hole.*

The present invention provides, in this second inventive aspect, an assembly comprising a bench with a first hole and an attachment device comprising a nut element, a flange element and a plurality of tabs. Said attachment device is inserted into the first hole until said flange element of the attachment device lays flush and supports on one side of the bench without passing through said hole, while the tabs and the nut element being arranged on the other side of the bench. The aim is introducing the attachment device through the first hole of the bench until the flange element of this device supports on a side of the bench since this flange element cannot pass through the first hole due to its dimension greater than the section of this first hole. The fact that the tabs protrudes from the attachment device beyond the section of the first hole does not represent an obstacle for the assembly since when the attachment device is inserted into the first hole of the bench the tabs are compressed inwards, thus allowing their passage through said first hole. Once the tabs pass the first hole release compression and are less compressed than when they are passing through the first hole and they being arranged protruding beyond the section of this first hole.

Advantageously, by supporting on one side of the bench without passing through the first hole, the flange element of the attachment device is correctly mounted and provide maintenance to the assembly. Moreover, in the previously mentioned positioning, the attachment device is ready for the screwing step.

Thus, the tabs of the attachment device are arranged on the other side of the bench in opposition to the flange element in such a way that the second projection of the tabs protrudes beyond the section of the first hole.

Advantageously, the passage of the tabs from being compressed when passing through the first hole of the bench to being less compressed and protruding beyond the section of this first hole provides the tabs make a characteristic noise which notifies the operator of the correct placement of the attachment device in the first hole. Once the tabs pass through the first hole and released from a certain compression, caused by their passage through the first hole, a noise is generated that helps the operator to know that the attachment device is correctly assembled on the bench.

In an particular embodiment, *the bench comprises a first plate with the first hole and a second plate with a second hole so that the flange element of the attachment device is supported between both first and second plates of the bench, and wherein the attachment device is configured so that screwing is performed from the second hole of the second plate of the bench, a head of the screw being supported and retained on the second plate and a threaded shank of the screw being inserted through the holes of the bench and along the axial thread-engaging bore of the nut element of the attachment device.*

Advantageously, the flange element of the attachment device is supported between both plates of the bench which provide correct maintenance of the assembly once the attachment device is screwed.

The attachment device is configured so that screwing is performed from the second hole of the second plate of the bench. The attachment device is mounted inside the first hole of the bench and then covered by the second plate in order to be the attachment device correctly placed into the bench. Then, the screw can be inserted inside the hole of the flange element of the attachment device and maintained the assembly once screwed.

Specifically, the screw presents a head which gets supported and retained on the second plate of the bench and a threaded shank of the screw which is inserted through the holes of the bench and along the axial thread-engaging bore of the nut element of the attachment which provide to the assembly to be correctly maintained in place.

Both the longitudinal axis of the attachment device and the screw axis are aligned and bring stability to the assembly.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic perspective view of an attachment device according to an embodiment of the invention.
- Figure 2: This figure shows a schematic perspective view of an assembly of the present attachment device according to an embodiment of the present invention.
- Figure 3: This figure shows a schematic cross sectional view of an assembly according to an embodiment of the present invention.
- Figure 4: This figure shows a schematic perspective view of an assembly according to an embodiment of the present invention.
- Figure 5: This figure shows a schematic cross sectional upper view of an attachment device according to an embodiment of the present invention.
- Figure 6: This figure shows a schematic bottom view of an attachment device according to an embodiment of the present invention.
- Figure 7a-7c: These figures show cross sectional side views of different positions of an attachment device according to an embodiment of the present invention.

### DETAILED DESCRIPTION OF THE INVENTION

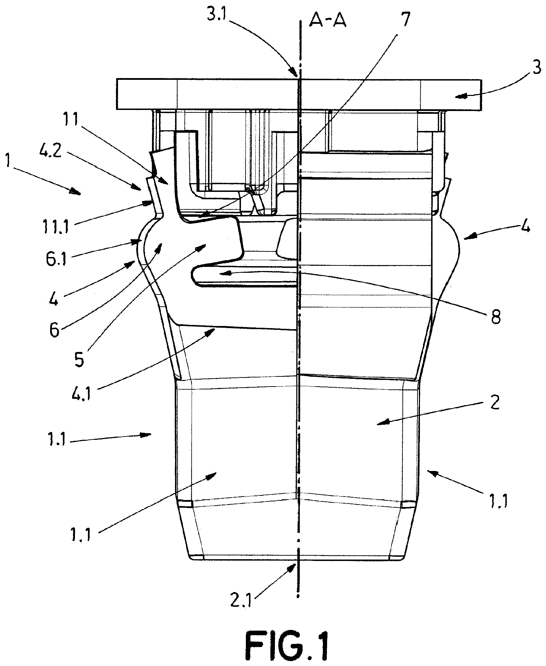

Figure 1 shows an attachment device (1) made of a non-conductive material and presenting a nut element (2), a flange element (3) and a plurality of tabs (4). The attachment device (1) comprises four side faces (1.1) and a tab (4) for each side face (1.1).The nut element (2) is extended along a longitudinal axis (A-A) and comprises an axial thread-engaging bore (2.1) parallel to said longitudinal axis (A-A) and configured to receive a threaded shank (10.2) of a screw (10) during a screwing. The flange element (3) is extended transversally to the same longitudinal axis (A-A) and comprises an opening (3.1) from which a screw begins to thread inside the attachment device (1). The flange element (3) is spaced axially from the nut element (2) along the longitudinal axis (A-A).

The attachment device (1) is configured to be screwed by a screw (10) (not shown in this figure) so that a screw (10) is inserted inside the opening (3.1) of the flange element (3) along the axial thread-engaging bore (2.1) of the nut element (2).

The attachment device (1) also presents a tab (4) on each side face (1.1) of said attachment device (1), wherein this tab (4) links the flange element (3) to the nut element (2).

The flange element (3) extends axially from the axis (A-A) beyond the tabs (4) and the nut element (2). Thus, the thickness of the attachment device (1) increases from nut element (2) to tabs (4) and from tabs (4) of flange element (3).

Each tab (4) comprises a first end (4.1) that connects the tab (4) to the nut element (2) and links the tab (4) and the nut element (2) both on same side face (1.1) of the attachment device (1). Each tab (4) further comprises a second end (4.2) that connects the tab (4) to the flange element (3).

In a preferred embodiment, the nut element (2), the flange element (3) and the plurality of tabs (4) of the attachment device (1) are symmetrically designed with respect to the longitudinal axis (A-A) on each side face (1.1) of the attachment device (1).

Each tab (4) of the present attachment device (1) shows a first projection (5) inwards said device (1) and a second projection (6) outwards the same device (1). The first projection (5) protrudes from the tab (4) towards inside the attachment device (1) where there is a free space that connects with the bore (2.1) of the nut element (2) and the opening (3.1) of the flange element (3).

According to figure 1, the first projection (5) defines a first gap (7) between the flange element (3) and this first projection (5) of the tab (4), and a second gap (8) between the first projection (5) of the tab (4) and the nut element (2).

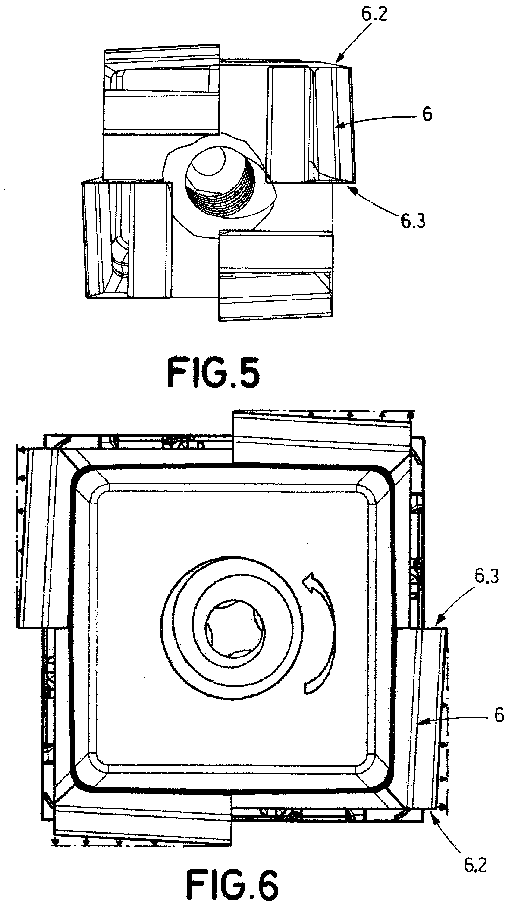

The second projections (6) present an outer face (6.1) protruding from the tabs (4) towards outside of the attachment device (1). In this particular example, the outer face (6.1) is a curved surface. Furthermore, these second projections (6) comprise two side ends (6.2, 6.3) that make the distance that the second projection (6) protrudes from the tab (4) in one of these side ends (6.2, 6.3) being different from the other side end (6.2, 6.2). That is, the second projection (6) does not protrude the same distance from the tab (4) in each side ends (6.2, 6.3). Particularly, on figures 5 and 6, it can be observed that the second projection (6) protrudes less in a first side end (6.2) than in a second side end (6.3). In this sense, the protrusion of the second projection (6) increases from one corner of the attachment device (1) towards the center of a side face (1.1) of the attachment device (1). The mentioned first side end (6.2) of the second projection (6) is a continuation of a side face (1.1) that is consecutive to the other side face (1.1) where the mentioned second projection (6) is located. More particularly, according to a particular tab (4), the first side end (6.2) and the second side end (6.3) are both contained in planes that are substantially transversal to the side face (1.1) of the device (1) where this tab (4) is located.

Furthermore, on figures 5 and 6, it can be also observed that according to a sectional view of the tabs (4) transverse to the longitudinal axis (A-A), the second projections (6) defined a straight line between the further points of the tab (4) at the side ends (6.2, 6.3). This straight line defines an even surface on the outer face (6.1) of this second projection (6) that facilitate sliding of the attachment deceive (1) on an assembly and disassembly processes.

This particular configuration of the second projections (6) in tabs (4) prevents providing more interference surface than needed and facilitates the assembly and disassembly of the attachment device (1).

Furthermore, the distance that the first projection (5) protrudes inwards from the tab (4) is greater than the distance that the second projection (6) protrudes from the tab (4).

Moreover, each tab (4) of the attachment device (1) also presents an elongated portion (11) between the second end (4.2) of the tab (4) and the first and second projections (5, 6) of each tab (4). Said elongated portion (11) is a weakened wall configured to facilitate the bending of the tab (4) and further assist the operator in the mounting stage of the attachment device (1). Particularly, the elongated portion (11) comprises an external surface (11.1) presenting a plurality of grooves or teeth in order to provide grip to the attachment device (1) when said external surface (11.1) gets in contact with a bench (not shown in this figure) during an assembly process.

The attachment device (1) shown in figure 1 is configured so that the tabs (4) bend and/or rotate. When a screwing is performing, the nut element (2) moves axially towards the flange element (3) until this nut element (2) contacts the tabs (4) and the tabs (4) contact the flange element (3). That is, when the nut element (2) approaches the flange element (3) along the longitudinal axis (A-A), the tabs (4) bend inwards the attachment device (1) and the outer face (6.1) of the second projection (6) approaches towards the flange element (3). When the first projection (1) bends inwardly, the first (7) and second (8) gap tend to disappeared for allowing the contact between the tabs (4) and the nut element (2) and between the tabs (4) and the flange element (3).

This attachment device (1) comprises at least two positions, a rest position and a compression position. The rest position is the position where the tabs (4) are free of bending and in a static state, while the compression position if the position where the tabs (4) are subjected to compression consequently to their bending. Specifically, figure 1 show an attachment device (1) in a rest position.

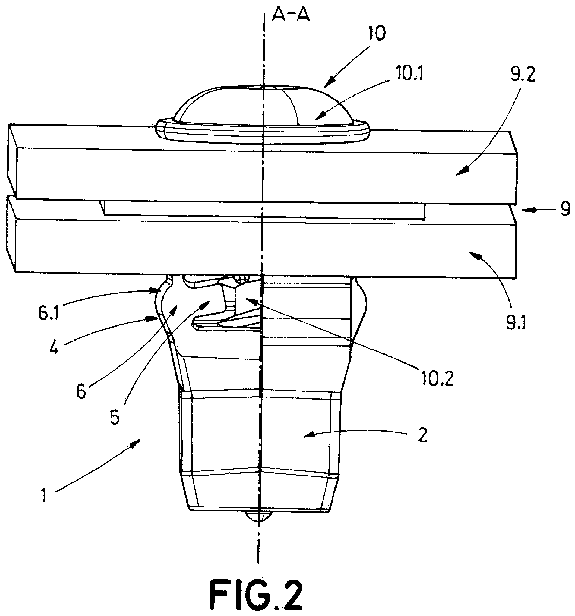

Figure 2 depicts an embodiment of the assembly according to the present invention where the attachment device (1), shown in figure 1, is assembled into a bench (9) and the assembled set is completely screwed by a screw (10). Particularly, the flange element (3) (not shown in this figure) of the attachment device (1) is placed between a first plate (9.1) and a second plate (9.2) of the bench (9). In order to assembly the attachment device (1) into a bench (9), said attachment device (1) is inserted through the first hole (12) of the first plate (9.1) so that the flange element (3) supports on a side of this first plate (9.1) and the tabs (4) and nut element (2) being arranged on the other side of the first plate (9.1).

In this embodiment of the present assembly, a screw (10) is driven longitudinally along the axis (A-A) in a way that its head (10.1) is supported and retained on the second plate (9.2) and this screwing is performed passing a threaded shank (10.2) through the second hole (13). Then, the threaded shank (10.2) of the screw (10) is inserted through the both holes (12, 13) of the two plates (9.1, 9.2) respectively, then go through the opening (3.1) of the flange element (3) and along the axial thread-engaging bore (2.1) of the nut element (2) of the attachment device (1).

Specifically, in figure 2 can be observed a free space inside the attachment device through which the threaded shank (10.2) of the screw (10) passes during a screwing process.

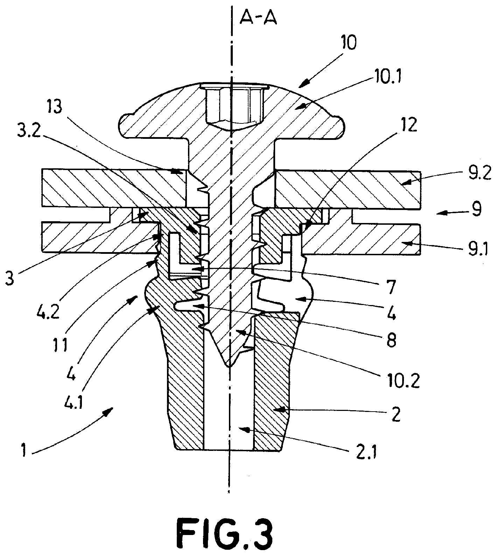

Figure 3 shows a cross sectional view of the attachment device (1) of figure 1 assembled into a bench (9) and a screw (10) screwing this assembly. In this figure 3, it can be observed in detailed how the flange element (3) being located between the first (9.1) and second (9.2) plate of the bench (9). Further, the elongated portion (11) of the tabs (4) are in contact and fixed to the first plate (9.1) of the bench (9). The screw (10) is partially inserted into the attachment device (10), and it can be observed that the threaded shank (10.2) has not threaded all the bore (2.1) of the nut element (2) and the head (10.1) has not contacted with the second plate (9.2) of the bench (9). In this figure, the screwing has not been completed.

Figure 3 further shows how the flange element (3) comprises a portion (3.2) that protrudes inwards the attachment device (1) substantially parallel to the longitudinal axis (A-A). This portion (3.2) of the flange element (3) defines the opening (3.1) in this flange element (3) through which the screw (10) passed.

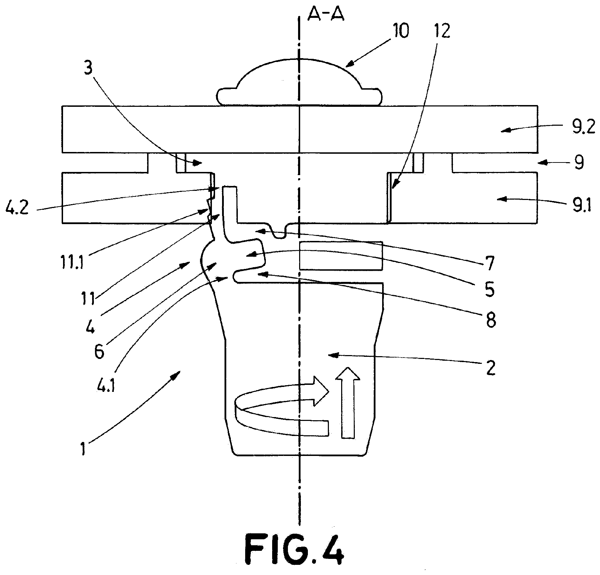

Figure 4 shows a schematic cross sectional view of the attachment device (1) of figure 1 assembled into a bench (9) as in figures 2 and 3. In this case, the attachment device (1) is in a compression position wherein the tabs (4) are subjected to bending and compression due to the insertion of the attachment device (1) into the bench (9).

Said figure 4 also depicts two arrows characterizing respectively the bending and rotation suffered by the attachment device (1), particularly the nut element (2) and the tabs (4) during an assembly or screwing process.

Figure 5 shows a cross sectional upper view of the attachment device (1), and figure 6 shows a bottom view of the same attachment device (1). Said figures depicts the straight line shaped between the two furthest points of each the tab (4) at the side ends (6.2, 6.3) of the second projection (6). Figure 6 specifically shows a set of arrows on the second projections (6) that defines deformation to which the tab (4) is subjected. That is, in a screwing, the attachment device (1) rotates slightly (as the arrow indicates) and the tabs (4) bend and/or twist so that the end side (6.2) of the second projection (6) that protrudes the least from the tab (4) reached the same protruding distance as the other side end (6.3) of the same tab (4).

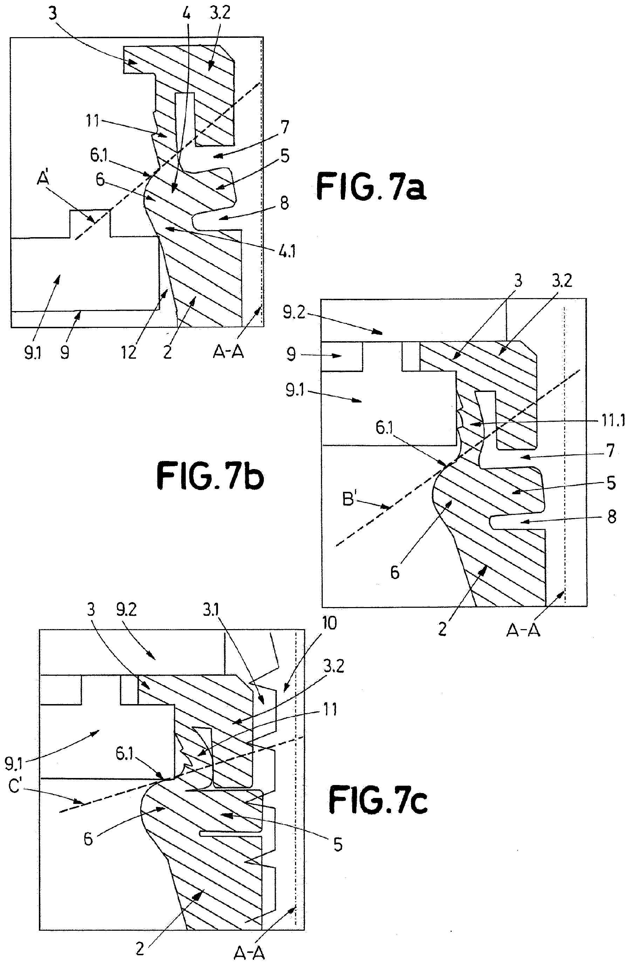

Figure 7a, 7b and 7c depict three positions of the attachment device (1) according to figure 1. Figure 7a shows a rest position of the attachment device (1) prior to be inserted into a bench (9) through the first hole (12) of the first plate (9.1) of this bench (9). In this rest position, the outer face (6.1) of the second projection (6) is contained in a first plane (A') that forms a first angle with respect to the longitudinal axis (A-A). Further, in this rest position, the tab (4) is not subjected to any bending or compression.

Figure 7a further shows the contact of the first end (4.1) of the tab (4) with the first plate (9.1), particularly at the edge of the first hole (12), once the nut element (2) is already inserted through this first hole (12) of the bench (9).

Figure 7b shows a first compression position of the attachment device (1) when this attachment device (1) is assembled into the bench (9). Particularly, the attachment device (1) is inserted inside the first hole (12) and the flange element (3) supports on one side of the bench (9), more specifically between the first plate (9.1) and the second plate (9.2) of the bench (9). Said figure 7b also depicts the bending characteristics of the elongated portion (11) which provides to the attachment device (1) the ability to be correctly inserted inside the bench (9). In this first compression position, the tab (4) is subjected to bending inwards so that the size of the gaps (7, 8) has been reduced compared to the rest position of the attachment device (1). In particular, the elongated position (11) is bended inwards the attachment device (1) and the outer face (6.1) of the second projection (6) is approached towards the first plate (9.1) of the bench (9). The outer face (6.1) is contained in a second plane (B') that forms an angle with respect to the longitudinal axis (A-A) that is greater than the angle formed by the first plane (A') with respect to the longitudinal axis (A-A).

Once the attachment device (1) is assembled into the bench (9), this device (1) is completely fixed thanks to the compression suffered by the tabs (4) and the grip fixation provided by the external surface (11.1) of the elongated portion (11). Particularly, the external surface (11.1) is an uneven surface with grooves or teeth for increasing the fixation capacity. This elongates portion (11) is a weakened wall that facilitates the bending of the tab (4) during the assembly and screwing process.

In the same figure 7b, the second plate (9.2) of the bench (9) is placed over both the flange element (3) and the first plates (9.1) in order to put together the assembly of the present invention.

To pass from the rest position (figure 7a) to a first compression position (figure 7b), the tabs (4) of the attachment device (1) are subjected to a compression greater than shown in figure 7b to allow the passage of these tabs (4) though the first hole (12) of the bench (9). Once the tabs (4) passage through this first hole (12) of the bench (9), the tabs (4) are positioned beyond the section of the first hole (12) as it shown in figure 7b. In this sense, as soon as the tabs (4) go through the first hole (12), a noise is automatically emitted that notifies the operator of the correct positioning of the attachment device (1) into the bench (9) by producing a characteristic sound of "click".

Finally, figure 7c shows a second compression position of the attachment device (1) when a screw (10) is inserted through the attachment device (1) and the bench (9). Particularly, the screw (10) is inserted inside both the second hole (13) of the second plate (9.2) of the bench (9) and through the opening (3.1) of the flange element (3) along the longitudinal axis (A-A). In screwing, the tab (4) continue to bend inwards so that the gap (7, 8) practically disappeared, the first projection (1) is fixed against the screw (10) and second projection (6) comes upwards and fixed against to bench (9) at the first plate (9.1). In this position, the outer face (6.1) of the second projection (6) is contained in a third plane (C') that forms an angle with respect to the longitudinal axis (A-A), being this angle greater than the angle formed by the second plane (B') (shown in figure 7b).

To pass from the first compression position (figure 7b) to the second compression position (figure 7c), the attachment device (1) is screwed by a screw (10) so that the tabs continue to bend inwards compared to figure 7b. In this position according to figure 7c, the tabs (4) are subjected to a compression greater than in figure 7b. Thus, by the action of driving the screw (10), through the attachment device (1) and the bench (9), the portion of the tab (4) in contact with the screw (10), that is the first projection (5), applies pressure on the said tab (4) which causes the elongated portion (11) to bend under the strain created by the screw (10).

The elongated portion (11) is approached to the portion (3.2) of the flange element (3) in figure 7b, while in figure 7c, the elongated portion (11) contacts to this portion (3.2) of the flange element (3) because of the tab (4) bending.

The attachment device (1) shown in the above described figures, provides the effect of increasing interference surface between the attachment device (1) and the bench (9) and the screw (10) compared to the prior art solution. This effect advantageously minimizes the risk of device detachment from the bench (9). Furthermore, this effect also increases the retention of the attachment device (1) once it is assembled into a bench (9). The interference surface during screwing varies according to the torque applied, increasing then the retention of the attachment device (1).

In addition, the particular configuration of the tabs (4) of present attachment device (1) allows these tabs (4) to absorb the torsion that is exerted by the screwing, causing the tabs (4) to only bend or rotate (being compressed) until the gaps (7, 8) disappear, then the tabs (4) return to their state of least compression.

The transition of attachment device positions between figures 7a-7c shows how the angle forms by the planes (A', B', C') with respect to the longitudinal axis (A-A) varies compared to other positions in these figures.

## Claims

1. Attachment device (1) comprising:
- a nut element (2) extending along a longitudinal axis (A-A) and comprising an axial thread-engaging bore (2.1),
- a flange element (3) extending transversely to the axis (A-A) and comprising an opening (3.1), the flange element (3) being spaced axially from the nut element (2), and
- a plurality of tabs (4) connecting the flange element (3) to the nut element (2), each tab (4) comprising a first end (4.1) connected to the nut element (2) and a second end (4.2) connected to the flange element (3);
wherein
the attachment device (1) is configured to be screwed by a screw (10) along the axial thread-engaging bore (2.1) of the nut element (2) from the opening (3.1) of the flange element (3),
each tab (4) comprises a first projection (5) inwards the attachment device (1) and a second projection (6) outwards the attachment device (1) having an outer face (6.1),
the first projection (5) defines a first gap (7) between the flange element (3) and a tab (4) and a second gap (8) between the nut element (2) and said tab (4), and
the nut element (2) is configured to move axially towards the flange element (3) until the nut element (2) contacts the tabs (4) and the tabs (4) contact the flange element (3) during screwing, so that when the nut element (2) is moved axially towards the flange element (3) the tabs (4) bend inwardly and the outer face (6.1) of the second projection (6) approaches towards the flange element (3).

2. Attachment device (1) according to claim 1, wherein the second projection (6) of the tab (4) comprises two side ends (6.2, 6.3) and the distance that the second projection (6) protrudes from the tab (4) varies between these side ends (6.2, 6.3) of this second projection (6), in such a way that the second projection (6) protrudes a higher distance at one (6.3) of their side ends than at the other side end (6.2).

3. Attachment device (1) according to claim 2, wherein according to a sectional view of the tab (4) transverse to the axis (A-A), the second projection (6) defines a straight line between the furthest points of the tab (4) at the side ends (6.2, 6.3) of the second projection (6).

4. Attachment device (1) according to any of previous claims, wherein the outer face (6.1) of the second projection (6) is contained in a plane that forms an angle with respect to the axis (A-A) so that when the nut element (2) is moved axially towards the flange element (3) the angle that said plane forms with respect to the axis (A-A) varies.

5. Attachment device (1) according to any of previous claims, wherein the attachment device (1) comprises at least a rest position and a compression position, on the rest position the tabs (4) are static and free of bending, and on the compression position the tabs (4) are bended inwardly the attachment device (1).

6. Attachment device (1) according to claims 4 and 5, wherein on the rest position the outer face (6.1) of the second projection (6) is contained in a first plane and on the compression position the outer surface (6.1) is contained in a second plane different to the first plane.

7. Attachment device (1) according to any of previous claims, wherein the distance that the first projection (5) protrudes from the tab (4) is greater than the distance that the second projection (6) protrudes from the tab (4).

8. Attachment device (1) according to any of previous claims, wherein the tabs (4) further comprise an elongated portion (11) between the second end (4.2) and the first and second projections (5, 6) of each tab (4), and wherein the elongated portion (11) is a weakened wall configured to facilitate the bending of the tab (4).

9. Attachment device (1) according to claim 8, wherein the elongated portion (11) comprises an uneven external surface (11.1).

10. Attachment device (1) according to any of previous claims, wherein the attachment device (1) comprises four side faces (1.1).

11. Attachment device (1) according to claim 10, comprising a tab (4) on each side face (1.1).

12. Attachment device (1) according to any of previous claims, wherein the attachment device (1) is further configured to be assembled into a bench (9) so that when the attachment device (1) is assembled into said bench (9) the outer face (6.1) of the second projection (6) of the tab (4) is positioned in opposition to the bench (9).

13. Attachment device (1) according to claim 12, wherein the attachment device (1) is configured so that during screwing the second projection (6) of the tab (4) is fixed against the bench (9) and at least a portion of the first projection (5) is fixed against the screw (10).

14. Assembly comprising a bench (9) with a first hole (12) and an attachment device (1) according to any of previous claims, the attachment device (10) being inserted into the first hole (12) so that the flange element (3) of the attachment device (1) supports on one side of the bench (9) without passing through the first hole (12) and the tabs (4) of the attachment device (1) being arranged on the other side of the bench (9) in opposition to the flange element (3) in such a way that the second projection (6) of the tabs (4) protrudes beyond the section of the first hole (12).

15. Assembly according to claim 14, wherein the bench (9) comprises a first plate (9.1) with the first hole (12) and a second plate (9.2) with a second hole (13) so that the flange element (3) of the attachment device (1) is supported between both first (9.1) and second (9.2) plates of the bench (9), and wherein the attachment device (1) is configured so that screwing is performed from the second hole (13) of the second plate (9.2) of the bench (9), a head (10.1) of the screw (10) being supported and retained on the second plate (9.2) and a threaded shank (10.2) of the screw (10) being inserted through the holes (12, 13) of the bench (9) and along the axial thread-engaging bore (2.1) of the nut element (2) of the attachment device (1).

## Patentansprüche

1. Befestigungsvorrichtung (1), aufweisend:
- ein Mutterelement (2), das sich entlang einer Längsachse (A-A) erstreckt und eine axiale Gewindeeingriffsbohrung (2.1) aufweist,
- ein Flanschelement (3), das sich quer zur Achse (A-A) erstreckt und eine Öffnung (3.1) aufweist, wobei das Flanschelement (3) axial von dem Mutterelement (2) beabstandet ist, und
- eine Vielzahl von Laschen (4), die das Flanschelement (3) mit dem Mutterelement (2) verbinden, wobei jede Lasche (4) ein erstes Ende (4.1), das mit dem Mutterelement (2) verbunden ist, und ein zweites, mit dem Flanschelement (3) verbundenes Ende (4.2) aufweist,
wobei
die Befestigungsvorrichtung (1) konfiguriert ist, um durch eine Schraube (10) entlang der axialen Gewindeeingriffsbohrung (2.1) des Mutterelements (2) von der Öffnung (3.1) des Flanschelements (3) geschraubt zu werden,
jede Lasche (4) einen ersten Vorsprung (5) einwärts der Befestigungsvorrichtung (1) und einen zweiten Vorsprung (6) auswärts der Befestigungsvorrichtung (1) mit einer Außenfläche (6.1) aufweist, der erste Vorsprung (5) einen ersten Spalt (7) zwischen dem Flanschelement (3) und einer Lasche (4) und einem zweiten Spalt (8) zwischen dem Mutterelement (2) und der Lasche (4) definiert, und
das Mutterelement (2) konfiguriert ist, um sich axial in Richtung des Flanschelements (3) zu bewegen, bis das Mutterelement (2) die Laschen (4) berührt und die Laschen (4) das Flanschelement (3) während des Schraubens berühren, so dass, wenn das Mutterelement (2) axial in Richtung des Flanschelements bewegt wird (3), sich die Laschen (4) nach innen biegen und sich die Außenfläche (6.1) des zweiten Vorsprungs (6) dem Flanschelement (3) nähert.

2. Befestigungsvorrichtung (1) nach Anspruch 1, wobei der zweite Vorsprung (6) der Lasche (4) zwei seitliche Enden (6.2, 6.3) aufweist und der Abstand, um den der zweite Vorsprung (6) von der Lasche (4) vorsteht, zwischen diesen seitlichen Enden (6.2, 6.3) dieses zweiten Vorsprungs (6) derart variiert, dass der zweite Vorsprung (6) an einem (6.3) seiner seitlichen Enden weiter vorsteht als an dem anderen seitlichen Ende (6.2).

3. Befestigungsvorrichtung (1) nach Anspruch 2, wobei gemäß einer Schnittansicht der Lasche (4) quer zu der Achse (A-A) der zweite Vorsprung (6) eine gerade Linie zwischen den am weitesten entfernten Punkten der Lasche (4) an den seitlichen Enden (6.2, 6.3) des zweiten Vorsprungs (6) definiert.

4. Befestigungsvorrichtung (1) nach einem der vorstehenden Ansprüche, wobei die Außenfläche (6.1) des zweiten Vorsprungs (6) in einer Ebene enthalten ist, die in Bezug auf die Achse (A-A) einen Winkel bildet, so dass wenn das Mutterelement (2) axial hin zu dem Flanschelement (3) bewegt wird, sich der Winkel, den die Ebene in Bezug auf die Achse (A-A) bildet, ändert.

5. Befestigungsvorrichtung (1) nach einem der vorstehenden Ansprüche, wobei die Befestigungsvorrichtung (1) zumindest eine Ruheposition und eine Kompressionsposition umfasst, wobei die Laschen (4) in der Ruheposition statisch und frei von Biegung sind, und die Laschen (4) in der Kompressionsposition nach einwärts der Befestigungsvorrichtung (1) gebogen sind.

6. Befestigungsvorrichtung (1) nach Anspruch 4 und 5, wobei die Außenfläche (6.1) des zweiten Vorsprungs (6) in der Ruheposition in einer ersten Ebene enthalten ist und die Außenfläche (6.1) in der Kompressionsposition in einer zweiten Ebene enthalten ist, die sich von der ersten Ebene unterscheidet.

7. Befestigungsvorrichtung (1) nach einem der vorstehenden Ansprüche, wobei der Abstand, um den der erste Vorsprung (5) von der Lasche (4) vorsteht, größer ist als der Abstand, um den der zweite Vorsprung (6) von der Lasche (4) vorsteht.

8. Befestigungsvorrichtung (1) nach einem der vorstehenden Ansprüche, wobei die Laschen (4) ferner einen länglichen Abschnitt (11) zwischen dem zweiten Ende (4.2) und den ersten und zweiten Vorsprüngen (5, 6) jeder Lasche (4) aufweisen, und wobei der längliche Abschnitt (11) eine geschwächte Wand ist, die konfiguriert ist, das Biegen der Lasche (4) zu erleichtern.

9. Befestigungsvorrichtung (1) nach Anspruch 8, wobei der längliche Abschnitt (11) eine unebene äußere Oberfläche (11.1) aufweist.

10. Befestigungsvorrichtung (1) nach einem der vorhergehenden Ansprüche, wobei die Befestigungsvorrichtung (1) vier Seitenflächen (1.1) aufweist.

11. Befestigungsvorrichtung (1) nach Anspruch 10, aufweisend eine Lasche (4) an jeder Seitenfläche (1.1).

12. Befestigungsvorrichtung (1) nach einem der vorstehenden Ansprüche, wobei die Befestigungsvorrichtung (1) ferner konfiguriert ist, um in eine Bank (9) eingebaut zu werden, so dass wenn die Befestigungsvorrichtung (1) in die Bank (9) eingebaut wird, die Außenfläche (6.1) des zweiten Vorsprungs (6) der Lasche (4) gegenüberliegend der Bank (9) positioniert ist.

13. Befestigungsvorrichtung (1) nach Anspruch 12, wobei die Befestigungsvorrichtung (1) derart konfiguriert ist, dass während des Schraubens der zweite Vorsprung (6) der Lasche (4) gegen die Bank (9) und zumindest einen Teil davon fixiert wird und zumindest ein Teil des ersten Vorsprungs (5) gegen die Schraube (10) fixiert wird.

14. Anordnung, aufweisend eine Bank (9) mit einem ersten Loch (12) und einer Befestigungsvorrichtung (1) nach einem der vorstehenden Ansprüche, wobei die Befestigungsvorrichtung (10) in das erste Loch (12) eingesetzt ist, so dass das Flanschelement (3) der Befestigungsvorrichtung (1) sich auf einer Seite der Bank (9) abstützt, ohne durch das erste Loch (12) hindurch zu treten, und die Laschen (4) der Befestigungsvorrichtung (1) auf der anderen Seite der Bank (9) gegenüberliegend des Flanschelements (3) angeordnet sind, so dass der zweite Vorsprung (6) der Laschen (4) über den Abschnitt des ersten Lochs (12) hinweg vorsteht.

15. Anordnung nach Anspruch 14, wobei die Bank (9) eine erste Platte (9.1) mit dem ersten Loch (12) und eine zweite Platte (9.2) mit einem zweiten Loch (13) aufweist, so dass das Flanschelement (3) der Befestigungsvorrichtung (1) zwischen sowohl der ersten (9.1) als auch der zweiten (9.2) Platte der Bank (9) gelagert wird, und wobei die Befestigungsvorrichtung (1) so konfiguriert ist, dass das Schrauben von dem zweiten Loch (13) der zweiten Platte (9.2) der Bank (9) aus durchgeführt wird, wobei ein Kopf (10.1) der Schraube (10) an der zweiten Platte (9.2) abgestützt und gehalten wird und ein Gewindeschaft (10.2) der Schraube (10) durch die Löcher (12, 13) der Bank (9) und entlang der axialen Gewindeeingriffsbohrung (2.1) des Mutterelements (2) der Befestigungsvorrichtung (1) eingeführt wird.

## Revendications

1. Dispositif de fixation (1) comprenant :
- un élément formant écrou (2) s'étendant le long d'un axe longitudinal (A-A) et comprenant un alésage axial d'engagement de filetage (2.1),
- un élément formant bride (3) s'étendant transversalement à l'axe (A-A) et comprenant une ouverture (3.1), l'élément formant bride (3) étant espacé axialement de l'élément formant écrou (2), et
- une pluralité de languettes (4) reliant l'élément formant bride (3) à l'élément formant écrou (2), chaque languette (4) comprenant une première extrémité (4.1) reliée à l'élément formant écrou (2) et une deuxième extrémité (4.2) reliée à l'élément formant bride (3) ;
le dispositif de fixation (1) étant configuré pour recevoir une vis (10) par vissage le long de l'alésage axial d'engagement de filetage (2.1) de l'élément formant écrou (2) depuis l'ouverture (3.1) de l'élément formant bride (3),
chaque languette (4) comprenant une première saillie (5) s'étendant vers l'intérieur du dispositif de fixation (1) et une deuxième saillie (6) s'étendant vers l'extérieur du dispositif de fixation (1) ayant une face extérieure (6.1),
la première saillie (5) définissant un premier espace (7) entre l'élément formant bride (3) et une languette (4) et un deuxième espace (8) entre l'élément formant écrou (2) et ladite languette (4), et
l'élément formant écrou (2) étant configuré pour se déplacer axialement vers l'élément formant bride (3) jusqu'à ce que l'élément formant écrou (2) vienne en contact avec les pattes (4) et que les pattes (4) viennent en contact avec l'élément formant bride (3) pendant le vissage, de sorte que lorsque l'élément formant écrou (2) est déplacé axialement vers l'élément formant bride (3), les pattes (4) se plient vers l'intérieur et la face extérieure (6.1) de la deuxième saillie (6) se rapproche de l'élément formant bride (3).

2. Dispositif de fixation (1) selon la revendication 1, dans lequel la deuxième saillie (6) de la patte (4) comprend deux extrémités latérales (6.2, 6.3) et la distance selon laquelle la deuxième saillie (6) dépasse de la patte (4) varie entre ces extrémités latérales (6.2, 6.3) de cette deuxième saillie (6), de telle manière que la deuxième saillie (6) dépasse d'une distance plus élevée à l'une (6.3) de leurs extrémités latérales qu'à l'autre extrémité latérale (6.2).

3. Dispositif de fixation (1) selon la revendication 2, dans lequel selon une vue en coupe de la patte (4) transversale à l'axe (A-A), la deuxième saillie (6) définit une ligne droite entre les points les plus éloignés de la patte (4) aux extrémités latérales (6.2, 6.3) de la deuxième saillie (6).

4. Dispositif de fixation (1) selon l'une quelconque des revendications précédentes, dans lequel la face externe (6.1) de la deuxième saillie (6) est contenue dans un plan qui forme un angle par rapport à l'axe (A-A) de sorte que lorsque l'élément formant écrou (2) est déplacé axialement vers l'élément formant bride (3), l'angle que ledit plan forme par rapport à l'axe (A-A) varie.

5. Dispositif de fixation (1) selon l'une quelconque des revendications précédentes, dans lequel le dispositif de fixation (1) comprend au moins une position de repos et une position de compression ; en position de repos, les pattes (4) sont statiques et non fléchissantes, et en position de compression, les pattes (4) sont repliées vers l'intérieur du dispositif de fixation (1).

6. Dispositif de fixation (1) selon les revendications 4 et 5, dans lequel, en position de repos, la face externe (6.1) de la deuxième saillie (6) est contenue dans un premier plan et, en position de compression, la face externe (6.1) est contenu dans un deuxième plan différent du premier plan.

7. Dispositif de fixation (1) selon l'une quelconque des revendications précédentes, dans lequel la distance selon laquelle la première saillie (5) dépasse de la languette (4) est supérieure à la distance selon laquelle la deuxième saillie (6) dépasse de la languette (4).

8. Dispositif de fixation (1) selon l'une quelconque des revendications précédentes, dans lequel les pattes (4) comprennent en outre une partie allongée (11) entre la deuxième extrémité (4.2) et les première et deuxième saillies (5, 6) de chaque patte (4), et dans lequel la partie allongée (11) est une paroi affaiblie configurée pour faciliter le pliage de la languette (4).

9. Dispositif de fixation (1) selon la revendication 8, dans lequel la partie allongée (11) comprend une surface externe irrégulière (11.1).

10. Dispositif de fixation (1) selon l'une quelconque des revendications précédentes, dans lequel le dispositif de fixation (1) comprend quatre faces latérales (1.1).

11. Dispositif de fixation (1) selon la revendication 10, comprenant une patte (4) sur chaque face latérale (1.1).

12. Dispositif de fixation (1) selon l'une quelconque des revendications précédentes, dans lequel le dispositif de fixation (1) est en outre configuré pour être assemblé dans une paroi (9) de sorte que lorsque le dispositif de fixation (1) soit assemblé dans ladite paroi (9), la face extérieure (6.1) de la deuxième saillie (6) de la patte (4) étant positionnée en opposition à la paroi (9).

13. Dispositif de fixation (1) selon la revendication 12, dans lequel le dispositif de fixation (1) est configuré pour que lors du vissage la deuxième saillie (6) de la patte (4) soit fixée contre la paroi (9) et qu'au moins une partie de la première saillie (5) soit fixée contre la vis (10).

14. Ensemble comprenant une paroi (9) ayant un premier trou (12) et un dispositif de fixation (1) selon l'une quelconque des revendications précédentes, le dispositif de fixation (10) étant inséré dans le premier trou (12) de sorte que l'élément formant bride (3) du dispositif de fixation (1) prend appui sur un côté de la paroi (9) sans passer au travers du premier trou (12), et les pattes (4) du dispositif de fixation (1) étant agencées de l'autre côté de la paroi (9) en opposition à l'élément formant bride (3) de telle manière que la deuxième saillie (6) des pattes (4) dépasse de la section du premier trou (12).

15. Ensemble selon la revendication 14, dans lequel la paroi (9) comprend une première plaque (9.1) ayant le premier trou (12) et une deuxième plaque (9.2) ayant un deuxième trou (13) de sorte que l'élément formant bride (3) du dispositif de fixation (1) est supporté entre les deux première (9.1) et deuxième (9.2) plaques de la paroi (9), et dans lequel le dispositif de fixation (1) est configuré de sorte que le vissage est effectué à partir du deuxième trou (13) de la deuxième plaque (9.2) de la paroi (9), une tête (10.1) de la vis (10) prenant appui contre la deuxième plaque (9.2) et étant retenue sur celle-ci, et une tige filetée (10.2) de la vis (10) étant insérée à travers les trous (12, 13) de la paroi (9) et le long de l'alésage axial d'engagement de filetage (2.1) de l'élément formant écrou (2) du dispositif de fixation (1).
